Europäisches Patentamt

European Patent Office

Office européen des brevets

(19)

(11) Veröffentlichungsnummer : **0 096 265**
**B1**

(12) **EUROPÄISCHE PATENTSCHRIFT**

(45) Veröffentlichungstag der Patentschrift :
20.08.86

(51) Int. Cl.⁴ : **H 01 M 10/42, H 01 M 10/34**

(21) Anmeldenummer : 83105005.9

(22) Anmeldetag : 20.05.83

(54) **Elektrochemische Speicherzelle.**

(30) Priorität : 03.06.82 DE 3220903
16.06.82 DE 3222525

(43) Veröffentlichungstag der Anmeldung :
21.12.83 Patentblatt 83/51

(45) Bekanntmachung des Hinweises auf die Patenterteilung : 20.08.86 Patentblatt 86/34

(84) Benannte Vertragsstaaten :
BE FR GB IT NL

(56) Entgegenhaltungen :
EP-A- 0 013 005
GB-A-   814 043
US-A- 4 011 366
US-A- 4 124 739

(73) Patentinhaber : BROWN, BOVERI & CIE Aktiengesellschaft
Kallstadter Strasse 1
D-6800 Mannheim 31 (DE)

(72) Erfinder : Jessen, Jens-Christian
Wasserturmstrasse 39
D-6904 Eppelheim (DE)
Erfinder : Lücke, Hans-Hermann
Auweg 8
D-6909 Walldorf (DE)

(74) Vertreter : Kempe, Wolfgang, Dr. et al
c/o Brown, Boveri & Cie AG Postfach 351
D-6800 Mannheim 1 (DE)

**Beschreibung**

Die Erfindung bezieht sich auf eine elektrochemische Speicherzelle gemäß dem Oberbegriff des Patentanspruches 1.

Solche wiederaufladbaren elektrochemischen Speicherzellen mit Festelektrolyten eignen sich sehr gut zum Aufbau von Akkumulatoren hoher Energie und Leistungsdichte. Solche Akkumulatoren kommen in vermehrten Maße als elektrische Energiequelle von Elektrofahrzeugen zum Einsatz. Die in den Alkali/Chalkogen-Speicherzellen verwendeten Festelektrolyten, die beispielsweise aus Beta-Aluminiumoxid gefertigt sind, zeichnen sich dadurch aus, daß die Teilleitfähigkeit des beweglichen Ions sehr hoch und die Teilleitfähigkeit der Elektronen um vielfache Zehnerpotenzen kleiner ist. Durch die Verwendung solcher Festelektrolyte für den Aufbau von elektrochemischen Speicherzellen wird erreicht, daß praktisch keine Selbstentladung stattfindet, da die Elektronenleitfähigkeit vernachlässigbar ist und die Reaktionssubstanzen auch nicht als neutrale Teilchen durch den Festelektrolyten gelangen können.

Für die Herstellung von Akkumulatoren bzw. Hochtemperatur-Speicherbatterien werden eine Vielzahl solcher elektrochemischer Speicherzellen miteinander verschaltet. Bei Hochtemperatur-Speicherbatterien für Elektrofahrzeuge bpsw. besteht die Notwendigkeit, viele elektrochemische Speicherzellen in Serie und nur wenige Speicherzellen parallel zu schalten. Gründe hierfür sind dadurch gegeben, daß der Energieinhalt einer solchen Hochtemperatur-Speicherbatterie im allgemeinen kleiner als 40 kWh sein wird, der Energieinhalt einer einzelnen Speicherzelle wird jedoch größer sein als 80 Wh. Daraus folgt, daß eine solche Hochtemperatur-Speicherbatterie nicht mehr als 500 Speicherzellen enthalten wird. Falls mit einer solchen Batterie bei einer Spannung der Einzelspeicherzelle von etwa 2 Volt insgesamt 200 Volt erzeugt werden sollen, müssen 100 Speicherzellen in Serie geschaltet werden. Das bedeutet, daß höchstens 5 Speicherzellen parallel geschaltet werden können. Kommt es bei einer oder mehreren Speicherzellen dieser Serienschaltung zu einer Überbelastung, so erhöht sich die Temperatur im Inneren der Speicherzelle. Ein Temperaturanstieg über die Arbeitstemperatur der Speicherzelle hinaus kann zu ihrer Zerstörung führen. Eine solche defekte Speicherzelle wird hochohmig, wodurch der gesamte Stromfluß durch die Reihenschaltung, in der sich diese Speicherzelle befindet, unterbrochen wird.

Aus der DE-OS 28 19 583 ist eine elektrochemische Speicherzelle bekannt, deren Stromkreis unterbrochen wird, wenn die Temperatur der Speicherzelle wesentlich über ihre Arbeitstemperatur ansteigt. Bei dieser Speicherzelle ist wenigstens einer der beiden Stromabnehmer aus zwei Teilstücken zusammengesetzt. Das erste Teilstück ist außerhalb und das zweite innerhalb der Speicherzelle angeordnet. Die beiden Teilstücke sind über ein elektrisch leitendes Kontaktelemente miteinander verbunden, das bei einer um einen vorgebbaren Betrag über der Arbeitstemperatur der Speicherzelle liegenden Temperatur schmilzt. Dadurch wird der Stromkreis durch die Speicherzelle unterbrochen. Von Nachteil ist hierbei, daß die elektrische Leitfähigkeit des Stromkollektors durch die Unterteilung in mehrere Abschnitte, insbesondere durch das Zwischenfügen eines schmelzbaren Kontaktelementes, gemindert wird, da an den Kontaktstellen Korrosionserscheinungen zu einer Herabsetzung der Leitfähigkeit führen können. Der Erfindung liegt ausgehend von dem eingangs genannten Stand der Technik die Aufgabe zugrunde, eine elektrochemische Speicherzelle zu schaffen, die bei einem Anstieg ihrer Innentemperatur über die Arbeitstemperatur von 350 °C hinaus selbsttätig aus dem Stromkreis der Hochtemperatur-Speicherbatterie herausgetrennt wird.

Die Aufgabe wird erfindungsgemäß durch die Merkmale des Patentanspruches 1 gelöst.

Eine weitere Lösung ist im kennzeichnenden Teil des Patentanspruches 4 offenbart.

Erfindungsgemäß ist der erste Stromkollektor als einseitig geschlossenes Rohr ausgebildet, das mit seinem geschlossenen Ende im Inneren des als Reaktandenraum dienenden becherförmigen Festelektrolyten angeordnet ist. Als zweiter Stromkollektor dient das ebenfalls becherförmig ausgebildete metallische Gehäuse, das mit dem zweiten Reaktandenraum in Verbindung steht. Im Inneren des einseitig geschlossenen Rohres ist ein zweites elektrisch leitendes Rohr angeordnet, dessen unteres Ende durch einen schmelzbaren elektrisch leitenden Stopfen verschlossen und in einem vorgebbaren Abstand von dem geschlossenen Ende des äußeren Rohres angeordnet ist. Zwischen den Innenflächen des äußeren Rohres und den Außenflächen des inneren Rohres ist rundum ein Isoliermaterial angeordnet. Innerhalb des inneren Rohres ist ein elektrisch leitender Stab installiert. Dieser ist in einer Ausnehmung des Stopfens angeordnet, der das innere Rohr verschließt. Der Stab ist elektrisch leitend mit dem Stopfen verbunden. Der Raum zwischen dem Stab und dem inneren Rohr kann mit einem Isoliermaterial ausgefüllt werden, es genügt jedoch, wenn er frei bleibt, d. h. kein elektrisch leitendes Material hierin angeordnet ist. Der Stab ist elektrisch leitend mit dem metallischen Gehäuse der Speicherzelle verbunden. Das innere Rohr dient als erster elektrischer Anschlußpol, während das obere Ende des äußeren Rohres als zweiter elektrischer Anschlußpol dient. Der Stopfen, der das innere Rohr am unteren Ende verschließt, ist aus einem elektrisch leitendem Werkstoff gefertigt, der bei einer Temperatur, die nur geringfügig über der Arbeitstemperatur der Speicherzelle liegt, zu schmelzen beginnt.

Kommt es bei der erfindungsgemäßen elektrochemischen Speicherzelle zu einem Anstieg der Temperatur, auf Werte, die über der Arbeitstemperatur der Speicherzelle liegen, so beginnt der Stopfen am unteren Ende des inneren Rohres zu schmelzen. Das untere Ende des inneren Rohres ist nur so weit von dem geschlossenen Ende des äußeren Rohres entfernt angeordnet, daß der Raum zwischen den beiden Rohren durch den schmelzenden Werkstoff des Stopfens vollständig ausgefüllt werden kann, derart, daß er beide Rohre elektrisch leitend miteinander verbindet.

Kommt es zu einer länger andauernden Temperaturerhöhung innerhalb der Speicherzelle, so schmilzt der Stopfen vollständig. Dadurch wird der elektrisch leitende Kontakt zwischen dem inneren Rohr und dem metallischen Gehäuse der Speicherzelle unterbrochen. Durch den schmelzenden Werkstoff des Stopfens wird nun eine elektrisch leitende Verbindung zwischen dem inneren Rohr und dem als Stromkollektor und elektrischen Anschlußpol dienenden äußeren Rohr ausgebildet. Durch diese Maßnahme wird der Stromkreis durch die elektrochemische Speicherzelle überbrückt. Es fließt kein Strom, auch kein Kurzschlußstrom, mehr durch die Speicherzelle. Hierdurch wird sichergestellt, daß die Speicherzelle nicht hochohmig werden kann. Der durch die übrigen Speicherzellen fließende Lade- bzw. Entladestrom nimmt keinerlei Einfluß auf die Speicherzelle.

Bei der zweiten erfindungsgemäßen Lösung dient das metallische Gehäuse der Speicherzelle ebenfalls als Stromkollektor, während ein zweiter Stromkollektor durch ein einseitig geschlossenes Rohr gebildet wird. Dieser zweite Stromkollektor ragt mit seinem geschlossenen Ende in den becherförmig ausgebildeten Festelektrolyten hinein. In dem Inneren des Rohres ist ein elektrisch leitender Zylinder angeordnet, dessen unteres Ende in einem vorgebbaren Abstand von dem Boden des Rohres angeordnet ist. Zwischen den seitlichen Außenflächen des Zylinders und den seitlichen Innenflächen des Rohres ist rundum ein Isoliermaterial angeordnet. Der Zylinder ist über einen elektrischen Leiter, der als elektrischer Anschlußpol dient, mit dem metallischen Gehäuse der Speicherzelle elektrisch leitend verbunden. An seinem unteren Ende weist der Zylinder eine Bohrung auf, die mit einem Isoliermaterial ausgekleidet ist. In diese Bohrung ist ein schmelzbares metallisches Bauelement eingesetzt, das in der Bohrung gehalten ist. Das Bauelement ist aus einer Legierung gefertigt, die bei einer Temperatur nur wenig oberhalb der Arbeitstemperatur der Speicherzelle schmelzbar ist. Der Abstand zwischen dem Zylinder und dem Boden des Rohres ist nur so groß gewählt, daß das Material des geschmolzenen Bauelementes den Raum zwischen dem Zylinder und dem Rohr vollständig ausfüllt und eine elektrisch leitende Verbindung zwischen dem Rohr und dem Zylinder bildet. Damit das Bauelement sofort auf die Änderung der Temperatur innerhalb der Speicherzelle anspricht, ist selbiges wenigstens wärmeleitend mit dem als zweiten Stromkollektor dienenden einseitig geschlossenen Rohr verbunden.

Kommt es bei der Speicherzelle zu einer Störung des normalen Lade- und Entladevorgangs oder einer Überbelastung der Speicherzelle, so kann dies eine Temperaturerhöhung im Inneren der Speicherzelle zur Folge haben. Steigt die Temperatur innerhalb der Speicherzelle wesentlich über die Arbeitstemperatr von 350 °C an, so beginnt das in der Bohrung des Zylinders angeordnete Bauelement zu schmelzen. Handelt es sich um eine längere Störung, so schmilzt das Bauelement vollständig. Die Schmelze füllt den Raum zwischen dem Zylinder und dem Rohr vollständig aus, so daß eine elektrisch leitende Verbindung gebildet wird, wodurch die beiden Stromkollektoren der Speicherzelle miteinander kurzgeschlossen werden. Durch die Speicherzelle fließt dann nur noch so lange ein Kurzschlußstrom bis diese vollständig entladen ist. Anschließend ist der Stromfluß durch die Speicherzelle vollständig unterbrochen.

Die Erfindung wird nachfolgend anhand von Zeichnungen erläutert. Es zeigen :

Figur 1   eine elektrochemische Speicherzelle,
Figur 2   eine Variante dieser Speicherzelle.

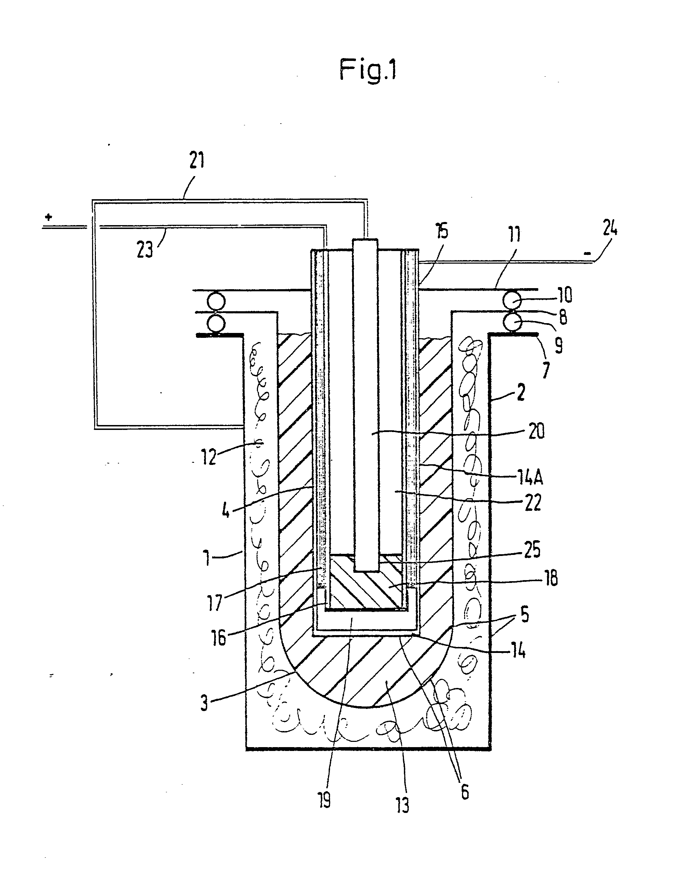

Die in Figur 1 gezeigte elektrochemische Speicherzelle 1 ist im Vertikalschnitt dargestellt.

Diese elektrochemische Speicherzelle 1 auf der Basis von Natrium und Schwefel ist im wesentlichen durch ein metallisches Gehäuses 2, einen Festelektrolyten 3 und einen stabförmigen Stromkollektor 4 gebildet. Das metallische Gehäuse 2 weist die Form eines Bechers auf. Im Inneren dieses becherförmigen Gehäuses 2 ist der ebenfalls becherförmig ausgebildete Festelektrolyt 3 angeordnet. Der Festelektrolyt 3 ist aus Beta-Aluminium oxid gefertigt. Seine Abmessungen sind so gewählt, daß zwischen den inneren Begrenzungsflächen des metallischen Gehäuses 2 und seinen äußeren Begrenzungsflächen ein zusammenhängender Zwischenraum 5 entsteht. Dieser Zwischenraum 5 dient bei dem hier dargestellten Ausführungsbeispiel als Kathodenraum. Das Innere des Festelektrolyten 3 wird als Anodenraum 6 genutzt. Das metallische Gehäuse 2 ist an seinem offenen Ende mit einem nach außen weisenden Flansch 7 versehen. Auf diesem ist der ebenfalls nach außen weisende Flansch 8 des Festelektrolyten 3 aufgesetzt. Der Flansch 8 des Festelektrolyten 3 wird durch einen Isolierring gebildet, der aus Alpha-Aluminiumoxid gefertigt ist. Die Verbindung zwischen dem Festelektrolyten 3 und dem Isolierring erfolgt über ein Glaslot (hier nicht dargestellt). Der Isolierring ist so ausgebildet, daß er über den Festelektrolyten 3 nach außen übersteht und damit gleichzeitig die Funktion des Flansches 8 übernimmt. Zwischen dem Flansch 7 des Gehäuses 2 und dem Flansch 8 des Festelektrolyten 3 ist vorzugsweise eine Dichtung 9 angeordnet. Durch den Flansch 8 des Festelektrolyten 3 wird der zwischen dem Gehäuse 2 und dem Festelektrolyten 3 liegende Kathodenraum 5 gegen den Anodenraum 6 und nach außen hin vollständig verschlossen. Der Verschluß des Anodenraums 6 erfolgt durch eine Verschlußplatte 11, die aus einem korrosionsbeständigen Material gefertigt ist. Die Verschlußplatte 11 liegt auf dem Flansch 8 des Festelektrolyten 3 auf. Zwischen dem Flansch 8 und der Verschlußplatte 11 ist eine Dichtung 10 angeordnet. Der zwischen dem metallischen Gehäuse 2 und dem Festelektrolyten 3 liegende Kathodenraum 5 ist mit einem Graphitfilz 12 ausgefüllt, der mit Schwefel getränkt ist. Als kathodischer Stromkollektor dient bei dem hier gezeigten Ausführungsbeispiel das metallische Gehäuse 2. Der anodische Stromkollektor 4 ist stabförmig ausgebildet und ragt weit in den becherförmigen Festelektrolyten 3, insbesondere in den Anodenraum 6 hinein. Bei der hier dargestellten Ausführungsform ist der Anodenraum 6 mit einem Metallfilz 13 ausgefüllt, der mit flüssigem Natrium getränkt ist. Der Metallfilz 13 ist so angeordnet, daß er den anodischen Stromkollektor 4 eng umschließt und fest an den Innenflächen des Festelektrolyten 3 anliegt. Der Metallfilz 13 wirkt als Kapillarstruktur, wodurch eine ständige Benetzung der Innenflächen des Festelektrolyten 3 mit Natrium erreicht wird. Der anodische Stromkollektor 4 wird durch ein einseitig geschlossenes Rohr 14 gebildet, das beispielsweise aus Stahl gefertigt ist. Das geschlossene Ende dieses Rohres 14 ist im unteren Bereich des Festelektrolyten 3 angeordnet. Das offenen Ende des Rohres 14 ist durch eine Bohrung 15 in der Verschlußplatte 11 nach außen hindurchgeführt und überragt diese um einige Milimeter. Im Inneren des Rohres 14 ist ein zweites Rohr 16 angeordnet, dessen Außendurchmesser geringfügig kleiner bemessen ist als der Innendurchmesser des Rohres 14. Zwischen den seitlichen Begrenzungsflächen der beiden Rohre 14 und 16 ist rundum ein Isoliermaterial 17 angeordnet. Das im Inneren des Rohres 14 angeordnete Ende des Rohres 16 ist durch einen Stopfen 18 verschlossen. Der Stopfen 18 ist aus einem elektrisch leitenden Werkstoff, insbesondere einer Legierung gefertigt, die oberhalb der Arbeitstemperatur, insbesondere oberhalb von 350 °C zu schmelzen beginnt. Das mit dem Stopfen 18 verschlossene Ende des Rohres 16 ist in einem vorgebbaren Abstand von dem verschlossenen Ende des Rohres 14 angeordnet, so daß zwischen den unteren Enden der beiden Rohre 14 und 16 ein freier Raum 19 ausgebildet wird. Die Größe des Raumes 19 ist gerade so groß gewählt, daß bei einem Schmelzen des Stopfens 18 die flüssig gewordene Legierung von diesem Raum 19 aufgenommen werden kann, derart, daß durch die Legierung eine elektrisch leitende Verbindung zwischen den Rohren 14 und 16 hergestellt wird. Um in einem solchen Fall einen guten elektrisch leitenden Kontakt zwischen dem Rohr 14 und dem Rohr 16 zu erhalten, ist die Isolierung 17, welche zwischen den seitlichen Begrenzungsflächen des Rohres 14 und des Rohres 16 angeordnet ist, nicht vollständig bis zum unteren Ende des Rohres 16 geführt. Im Inneren des Rohres 16 ist ein elektrisch leitender Stab 20 angeordnet, der mit seinem unteren Ende in einer Ausnehmung 25 des Stopfens 18 angeordnet ist. Der Stab 20 steht über den Stopfen 18 elektrisch leitend mit dem Rohr 16 in Verbindung. Der Stab 20 ist vorzugsweise an seinem oberen Ende über einen elektrischen Leiter 21 mit dem metallischen Gehäuse 2 der Speicherzelle 1 elektrisch leitend verbunden. Zwischen den Innenflächen des Rohres 16 und den Außenflächen des Stabes 20 ist ein Isoliermaterial 22 angeordnet. Es kann sich hierbei um einen Vollzylinder aus einem isolierenden Werkstoff handeln, der eine durchgehende Bohrung aufweist, in welche der Stab 20 eingesetzt und gehaltert ist. Der Außendurchmesser eines solchen Zylinders ist gerade so groß gewählt, daß er noch in das Innere des Rohres 16 eingesetzt werden kann und zwischen den Innenflächen des Rohre 16 gehaltert ist. Als Isoliermaterial ist beispielsweise Polytetrafluoräthylen geeignet. Bei einem solchen Zylinder wird die Bohrung für den Stab 20 mit einem Innendurchmesser ausgebildet, der etwas kleiner ist als der Außendurchmesser des Stabes 20. Für das Einsetzen des Stabes 20 in die Bohrung wird der Zylinder dann auf eine Temperatur von 400 bis 500 °C erwärmt, wodurch sich der Innendurchmesser der Bohrung vergrößert und der Stab 20 eingesetzt werden kann. Beim Abkühlen des Zylinders 22 auf die Raumtemperatur wird der Innendurchmesser der Bohrung wieder etwas kleiner, so daß der Zylinder 22 den Stab 20 fest umschließt. Der Außendurchmesser eines solchen Zylinders 22 wird etwas größer gewählt als der Innendurchmesser des Rohres 16. Für das Einsetzen des Zylinders 22 in das Rohr 16 wird dieser auf eine Temperatur unterhalb der Raumtemperatur abgekühlt, wobei sein Außendurchmesser etwas kleiner wird. Anschließend kann der Zylinder problemlos in das Innere des Rohres 16 eingesetzt werden. Erwärmt sich der Zylinder 22 wieder auf die Raumtemperatur, so versucht er seine ursprüngliche Größe wieder einzunehmen. Er wird dadurch fest gegen die Innenflächen des Rohres 16 gepreßt, wodurch er einen festen Sitz innerhalb des Rohres 16 erhält.

Das obere Ende des Rohres 16 ist bei der hier dargestellten Ausführungsform an einen elektrischen Leiter 23 angeschlossen, über den die Verbindung mit der nächsten Speicherzelle (hier nicht dargestellt) erfolgt. Ein zweiter elektrischer Leiter 24 ist an das obere Ende des Rohres 14 angeschlossen und dient ebenfalls der Verbindung mit einer weiteren Speicherzelle (hier nicht dargestellt).

Kommt es innerhalb der Speicherzelle 1 zu einem Temperaturanstieg über die Arbeitstemperatur der Speicherzelle hinaus, d. h. werden Temperaturwerte von 400 und mehr Grad C erreicht, so beginnt der Stopfen 18 zu schmelzen. Für die Herstellung dieses Stopfens wird eine Legierung verwendet, deren Schmelzpunkt zwischen 350 und 400 °C liegt. Ist der Stopfen 18 vollständig geschmolzen, so wird die elektrisch leitende Verbindung zwischen dem Rohr 16 und dem Stab 20, der elektrisch leitend mit dem metallischen Gehäuse der Speicherzelle in Verbindung steht, vollständig unterbrochen. Die in den Raum 19 geflossene Legierung füllt diesen Raum 19 vollständig aus und bildet eine elektrisch leitende Verbindung zwischen dem Rohr 14 und dem Rohr 16. Durch die Unterbrechung des elektrisch leitenden Kontaktes zwischen dem als Stromkollektor des Kathodenraums 5 dienenden metallischen Gehäuse 2 und dem elektrischen Anschlußpol 16 der Speicherzelle 1 wird der Stromkreis durch diese Speicherzelle unterbrochen. Durch die elektrisch leitende Verbindung zwischen dem Rohr 14 und dem Rohr 16 wird die speicherzelle überbrückt. Ist die Speicherzelle 1 in eine Serienschaltung von mehreren Speicherzellen (hier nicht dargestellt) eingeschaltet, so fließt der Lade- bzw. Entladestrom der anderen Speicherzellen dieser Reihenschaltung zwischen den beiden elektrischen Anschlußpolen 16 und 14, ohne daß diese Ströme irgendwelchen Einfluß auf diese Speicherzelle 1 nehmen. Es kann dadurch zu keiner Unterentladung der Speicherzelle 1 bzw. zum Fließen eines Kurzschlußstromes kommen. Sind beispielsweise die mit dieser Speicherzelle in Serie geschalteten Speicherzellen noch nicht vollständig entladen, so fließt der von diesen Speicherzellen kommende Entladestrom über die beiden Anschlußpole 14 und 16.

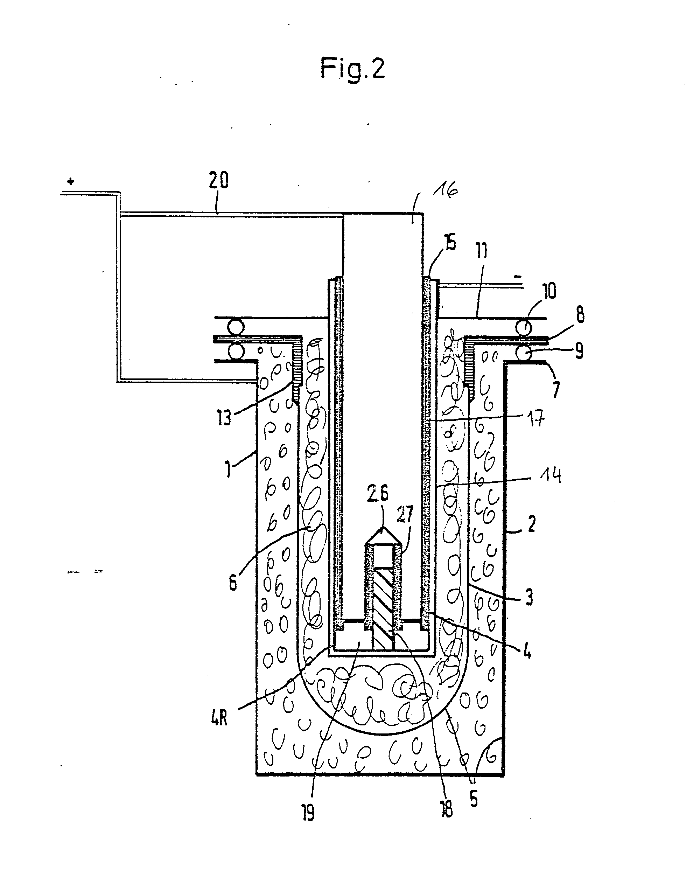

Die in Figur 2 ebenfalls im Vertikalschnitt dargestellte elektrochemische Speicherzelle 1 wird im wesentlichen durch ein metallisches Gehäuse 2, einen Festelektrolyten 3 und einen Stromkollektor 4 gebildet. Sein metallisches Gehäuse 2 weist ebenfalls die Form eines Bechers auf. Im Inneren des Gehäuses 2 ist der ebenfalls becherförmig ausgebildete Festelektrolyt 3 angeordnet. Der Festelektrolyt 3 ist auch hierbei aus Betaaluminiumoxid gefertigt. Seine Abmessungen sind so gewählt, daß zwischen den inneren Begrenzungsflächen des metallischen Gehäuses 2 und seinen äußeren Begrenzungsflächen ein zusamenhängender Zwischenraum 5 entsteht. Dieser Zwischenraum 5 dient bei dem hier dargestellten Ausführungsbeispiels als Kathodenraum. Dieser ist mit einem Graphitfilz 12 ausgefüllt, der mit dem Schwefel getränkt ist. Der Innenraum des Festelektrolyten 3 wird als Anodenraum 6 genutzt. Das metallische Gehäuse ist an seinem oberen Ende ebenfalls mit einem nach außen weisenden Flansch 7 versehen. Auf diesem ist der ebenfalls nach außen weisende Flansch des Festelektrolyten 3 aufgesetzt. Der Flansch 8 des Festelektrolyten 3 wird durch einen Isolierring gebildet, der aus Alphaaluminiumoxid gefertigt ist. Die Verbindung zwischen dem Festelektrolyten 3 und dem Isolierring 8 erfolgt über ein Glaslot (hier nicht dargestellt). Der Isolierring 8 ist so ausgebildet, daß er über den Festelektrolyten 3 nach außen übersteht und gleichzeitig die Funktion eines Flansches 8 übernimmt. Zwischen dem Flansch 7 des Gehäuses 2 und dem Flansch 8 des Festelektrolyten 3 ist vorzugsweise eine Dichtung 9 angeordnet. Durch den Flansch 8 des Festelektrolyten 3 wird der zwischen dem Gehäuse 2 und dem Festelektolyten 3 wird der zwischen dem Gehäuse 2 und des Festelektolyten 3 liegende Kathodenraum gegen den Anodenraum 6 nach außen hin vollständig verschlossen. Der Verschluß des Anodenraums erfolgt durch eine Verschlußplatte 11, die aus einem korrosionsbeständigen nichtleitenden Material gefertigt ist. Die Verschlußplatte 11 liegt auf dem Flansch 8 des Festelektrolyten 3 auf. Zwischen dem Flansch 8 und der Platte 11 ist eine Dichtung 10 angeordnet. Bei dem hier dargestellten Ausführungsbeispiel übernimmt das metallische Gehäuse die Funktion des kathodischen Stromabnehmers. Der anodische Stromabnehmer 4 hat die Form eines Stabes und ragt weit in den becherförmigen Festelektrolyten 3, insbesondere in den becherförmigen Festelektrolyten 3, insbesondere in den anodenraum 6, hinein. Der Anodenraum 6 ist mit einem Metallfilz 13 ausgefüllt, der mit flüssigem Natrium getränkt ist. Der Metallfilz 13 ist so angeordnet, daß er den anodischen Stromabnehmer 4 eng umschließt und fest an den Innenflächen des Festelektrolyten 3 anliegt. Der Metallfilz 13 hat die Wirkung einer Kapillarstruktur, wodurch erreicht wird, daß die Innenflächen des Festelektrolyten 3 immer mit Natrium benetzt sind, was für eine optimale Funktion der Speicherzelle 1 unbedingt erforderlich ist. Der anodische Stromabnehmer 4 wird duch ein einseitig verschlossenes Rohr 4R gebildet, das aus Stahl gefertigt ist. Das Rohr 4R ist mit seinem verschlossenen Ende in dem becherförmigen Festelektrolyten angeordnet. Innerhalb dieses Rohres 4R ist Zylinder 16 angeordnet, der aus einem elektrisch leitenden Material gefertigt ist. Der Außendurchmesser des Zylinders 16 ist geringfügig kleiner als der Innendurchmesser des Rohres 4R. Zwischen den seitlichen Innenflächen des Rohres 4R und den seitlichen Außenflächen des Zylinders 16 ist rundum ein Isoliermaterial 17 so angeordnet, daß sich zwischen dem Rohr 4R und dem Zylinder 16 keine elektrisch leitende Verbindung ausbilden kann. Das in dem Rohr 4R angeordnete Ende des Zylinders 16 weist eine Bohrung 26 auf, die in der Längsachse des Zylinders 16 verläuft. Die Bohrung ist mit einem Isoliermaterial 27 ausgekleidet. Innerhalb der Bohrung 26 ist ein schmelzbares Bauelement 18 angeordnet und gehaltert. Das Bauelement 18 ist aus einer Legierung gefertigt, die bei einer Temperatur, die nur wenig oberhalb der Arbeitstemperatur der Speicherzelle liegt, zu schmelzen beginnt. Die Länge des Bauelementes 18 ist so gewählt, daß dieses zumindest in wärmeleitendem Kontakt mit dem Boden des Rohres 4R steht. Das untere Ende des Zylinders 16 ist in einem vorgebbaren Abstand von dem geschlossenen Ende des Rohres 4R angeordnet. Der Abstand ist so groß gewählt, daß das Volumen des zwischen dem Zylinder 16 und dem Rohr 4R verbleibenden Raum 19 so groß ist, wie das Volumen des Bauelementes 18. Insbesondere ist die Größe des Raumes 19 so gewählt, daß bei einem Temperaturanstieg über die Arbeitstemperatur der Speicherzelle hinaus das Material des schmelzenden Bauelementes den Raum 19 vollständig ausfüllt und eine elektrisch leitende Verbindung zwischen dem Zylinder 16 und dem Rohr 4R bildet. Das offene Ende des Rohres 4R ist bei dem hier dargestellten Ausführungsbeispiel durch eine mittige Bohrung der Verschlußplatte 11 nach außen geführt und steht einige Millimeter über dieser über. Der Zylinder 16 ragt aus der Speicherzelle 1 heraus und ist über einen elektrischen Leiter 20, der als elektrischer Anschlußpol der Speicherzelle 1 dient, mit dem metallischen Gehäuse 2 der Speicherzelle 1 elektrisch leitend verbunden. Das obere Ende des Rohres 4R dient als zweiter elektrischer Anschlußpol. Kommt es zu einem Temperaturanstieg innerhalb der Speicherzelle, so werden die beiden Stromkollektoren durch die Schmelze des Bauelementes 18 elektrisch leitend miteinander verbunden.

Die Erfindung beschränkt sich nicht nur auf die in den Figuren 1 und 2 dargestellten Ausführungsbeispiele, vielmehr umfaßt sie alle elektrochemischen Speicherzellen, bei denen die beiden elektrischen Stromkollektoren bzw. die beiden elektrischen Anschlußpole während eines Temperaturanstieges durch die Schmelze eines elektrisch leitenden Bauelementes dauerhaft miteinander kurzgeschlossen werden. Die in den Figuren 1 und 2 dargestellten Speicherzellen können in dieser Form auch als inverse Speicherzellen betrieben werden.

**Patentansprüche**

1. Elektrochemische Speicherzelle (1) auf der Basis von Alkalimetall und Chalkogen mit mindestens zwei elektrischen Anschlußpolen (14, 16) sowie einem Anodenraum (6) und einem Kathodenraum (5), die beide mit jeweils mindestens einem Stromkollektor (2, 4) versehen und durch einen becherförmigen, alkaliionenleitenden Festelektrolyten (3) voneinander getrennt und wenigstens von einem metallischen Gehäuse (2) begrenzt sind, dadurch gekennzeichnet, daß ein erster, als Anschlußpol dienender Stromkollektor als einseitig geschlossenes Rohr (14) ausgebildet und mit seinem geschlossenen Ende im Inneren des Festelektrolyten (3) angeordnet ist, daß innerhalb des Rohres (14) ein zweites ebenfalls als Anschlußpol dienendes Rohr (16) vorgesehen ist, dessen unteres Ende in einem vorgebbaren Abstand von dem geschlossenen Ende des ersten Rohres (14) angeordnet und durch einen elektrisch leitenden Stopfen (18) aus einer schmelzbaren Legierung verschlossen ist, daß innerhalb des zweiten Rohres (16) ein zylindrischer elektrisch leitender Stab (20) angeordnet ist, der in einer Ausnehmung (25) des das zweite Rohr (16) verschließenden Stopfens (18) angeordnet und elektrisch leitend mit diesem verbunden ist, und daß der Stab (20) elektrisch leitend mit dem als zweiten Stromkollektor dienenden metallischen Gehäuse (2) verbunden ist, und die beiden Stromkollektoren (2, 4) bei einem Anstieg der Temperatur auf Werte, die nur wenig über der Arbeitstemperatur der Speicherzelle (1) liegen, über die geschmolzene, elektrisch leitende Legierung des Stopfens (18) miteinander verbunden sind.

2. Elektrochemische Speicherzelle nach Anspruch 1, dadurch gekennzeichnet, daß zwischen den Innenflächen des äußeren Rohres (14) und den Außenflächen des inneren Rohres (16) ein Isoliermaterial (17) angeordnet ist.

3. Elektrochemische Speicherzelle nach einem der Ansprüche 1 oder 2, dadurch gekennzeichnet, daß ein unterhalb des Stopfens (20) befindlicher Raum (19) die gesamte Legierung des geschmolzenen Stopfens (18) derart aufnehmen kann, daß nur die beiden Rohre (14, 16) elektrisch leitend über die Legierung verbunden sind.

4. Elektrochemische Speicherzelle (1) auf der Basis von Alkalimetall und Chalkogen mit mindestens zwei elektrischen Anschlußpolen (14 und 16) sowie einem Anodenraum (6) und einem Kathodenraum (5), die beide mit jeweils mindestens einem Stromkollektor (2, 4) versehen und durch einen alkaliionenleitenden Festelektrolyten (3) voneinander getrennt und von einem metallischen Gehäuse (2) begrenzt sind, dadurch gekennzeichnet, daß das metallische Gehäuse (2) als erster Stromkollektor dient, und der zweite Stromkollektor (4) als einseitig geschlossenes Rohr (4R) ausgebildet ist, das mit seinem geschlossenen Ende in dem Festelektrolyten (3) angeordnet ist, daß im Inneren des Rohres (4R) ein Zylinder (16) installiert ist, dessen unters Ende einen vorgegeben Abstand von dem Boden des Rohres (4R) aufweist, und zwischen dem Zylinder (16) und dem Rohr (4R) rundum ein Isoliermaterial (17) vorgesehen ist, daß der Zylinder (16) an seiner Unterseite eine mit einem Isoliermaterial ausgekleidete Bohrung (26) aufweist, in welche ein schmelzbares metallisches Bauelement (18) eingesetzt und gehaltert ist, das aus einer Legierung gefertigt ist, die bei einer Temperatur nur wenige Grad über der Arbeitstemperatur der Speicherzelle schmelzbar ist, und daß das Bauelement (18) wenigstens in wärmeleitendem Kontakt mit dem Rohr (4R) steht.

5. Elektrochemische Speicherzelle nach Anspruch 4, dadurch gekennzeichnet, daß der Abstand zwischen dem Zylinder (16) und dem Boden des Rohres (4R) nur so groß gewählt ist, daß die Legierung des geschmolzenen Bauelemtes (18) den Raum (19) zwischen dem Rohr (4R) und dem Zylinder (14) vollständig ausfüllt und eine elektrisch leitende Verbindung zwischen dem Rohr (4R) und dem Zylinder (16) bildet.

6. Elektrochemische Speicherzelle nach einem der Ansprüche 4 oder 5, dadurch gekennzeichnet, daß der Zylinder (16) über einen elektrischen Leiter (20) mit dem Gehäuse (2) verbunden ist.

**Claims**

1. Electrochemical storage cell (1) based on an alkali metal and a chalcogen and having at least two electric terminals (14, 16) as well as an anode space (6) and a cathode space (5), both of which are each provided with at least one current collector (2, 4) and are separated from one another by a can-shaped, alkali metal ion-conducting solid electrolyte (3) and are bounded at least by one metallic housing (2), characterized in that a first current collector serving as a terminal is formed as a pipe (14) closed at one end and is arranged with its closed end in the interior of the solid electrolyte (3), that within the pipe (14) a second pipe (16) is provided which likewise serves as a terminal and the lower end of which is arranged at a presettable distance from the closed end of the first pipe (14) and is closed by an electrically conductive stopper (18) of a fusible alloy, that within the second pipe (16) a cylindrical, electrically conductive rod (20) is arranged which is located in a recess (25) of the stopper (18) closing the second pipe (16) and is electrically conductively connected to the stopper, and that the rod (20) is electrically conductively connected to the metallic housing (2) serving as the second current collector, and the two current collectors (2, 4) are, when the temperature rises to values which are only slightly above the working temperature of the storage cell (1), connected to one another via the fused, electrically conductive alloy of the stopper (18).

2. Electrochemical storage cell according to Claim 1, characterized in that an insulating material (17) is arranged between the inner surfaces of the outer pipe (14) and the outer surfaces of the inner pipe (16).

3. Electrochemical storage cell according to one of Claims 1 or 2, characterized in that a space (19) located below the stopper (20) can receive the entire alloy of the fused stopper (18) in such a way that only the two pipes (14, 16) are electrically conductively connected via the alloy.

4. Electrochemical storage cell (1) based on an alkali metal and a chalcogen and having at least two electric terminals (14 and 16) as well as an anode space (6) and a cathode space (5), both of which are each provided with at least one current collector (2, 4) and are separated from one another by an alkali metal ion-conducting solid electrolyte (3) and are bounded by a metallic housing (2) characterized in that the metallic housing (2) serves as the first current collector and the second current collector (4) is formed as a pipe (4R) which is closed at one end and is arranged with its closed end in the solid electrolyte (3), that in the interior of the pipe (4R) a cylinder (16) is installed, the lower end of which has a preset distance from the bottom of the pipe (4R),and an insulating material (17) is provided all round between the cylinder (16) and the pipe (4R), that the cylinder (16) has on its underside a bore (26) which is lined with an insulating material and in which a fusible metallic component (18) is inserted and held, which is made of an alloy which is fusible at a temperature of only a few degrees above the working temperature of the storage cell, and that the component (18) is in at least thermally conductive contact with the pipe (4R).

5. Electrochemical storage cell according to Claim 4, characterized in that the distance between the cylinder (16) and the bottom of the pipe (4R) is selected in a size only such that the alloy of the fused component (18) completely fills the space (19) between the pipe (4R) and the cylinder (14) and makes an electrically conductive connection between the pipe (4R) and the cylinder (16).

6. Electrochemical storage cell according to one of Claims 4 or 5, characterized in that the cylinder (16) is connected via an electrical conductor (20) to the housing (2).

**Revendications**

1. Cellule d'accumulateur électrochimique (1) à base de métal alcalin et de chalcogène, comportant au moins deux pôles de raccordement électriques (14, 16) ainsi qu'un volume d'anode (6) et un volume de cathode (5), lesquels sont munis chacun d'au moins un collecteur de courant (2, 4) et sont séparés l'un de l'autre par un électrolyte solide (3) en forme de godet, conducteur des ions alcalins, et sont délimités par au moins une enveloppe métallique (2), caractérisé en ce qu'un premier collecteur de courant servant de pôle de raccordement est réalisé sous la forme d'un tube (14) fermé d'un seul côté et est agencé, par son extrémité fermée, à l'intérieur du tube (14), un deuxième tube (16) qui sert également de pôle de raccordement et dont l'extrémité inférieure est agencée à une distance prédéterminable de l'extrémité fermée du premier tube (14) et est fermée par un bouchon (18) électriquement conducteur, fait d'un alliage fusible, en ce qu'à l'intérieur du deuxième tube (16) est agencée une barre (20) cylindrique électriquement conductrice qui est disposée dans un évidement (25) du bouchon (18) fermant le deuxième tube (16) et qui est électriquement reliée à ce bouchon, et en ce que la barre (20) est électriquement reliée à l'enveloppe métallique (2) servant de deuxième collecteur de courant, les deux collecteurs de courant (2, 4) étant reliés l'un à l'autre, par l'alliage fondu, électriquement conducteur, du bouchon (18) lorsque la température monte à des valeurs qui ne dépassent que faiblement la température de travail de la cellule d'accumulateur (1).

2. Cellule d'accumulateur électrochimique selon la revendication 1, caractérisée en ce qu'une matière isolante (17) est agencée entre les surfaces intérieures du tube externe (14) et les surfaces extérieures du tube interne (16).

3. Cellule d'accumulateur électrochimique selon l'une des revendications 1 ou 2, caractérisée en ce qu'un volume (19) se trouvant en dessous du bouchon (18) peut recevoir la totalité de l'alliage du bouchon fondu (18), de façon que les deux tubes (14, 16) soient seulement électriquement reliés par l'alliage.

4. Cellule d'accumulateur électrochimique (1) à base de métal alcalin et de chalcogène, comportant au moins deux pôles de raccordement électrique (14 et 16) ainsi qu'un volume d'anode (6) et un volume de cathode (5). lesquels sont munis chacun d'au moins un collecteur de courant (2, 4) et sont séparés l'un de l'autre par un électrolyte solide (3) conduisant les ions alcalins et sont délimités par une enveloppe métallique (2), caractérisée en ce que l'enveloppe métallique (2) sert de premier collecteur de courant, en ce que le deuxième collecteur de courant (4) est aménagé sous la forme d'un tube (4R) qui est fermé d'un seul côté et qui, par son extrémité fermée, est agencé dans l'électrolyte solide (3), en ce qu'à l'intérieur de ce tube (4R) est installé un cylindre (16) dont l'extrémité inférieure est à une distance prédéterminée du fond du tube (4R), une matière isolante (17) étant prévue sur tout le pourtour entre le cylindre (16) et le tube (4R), en ce que le cylindre (16) présente, en son côté dessous, un trou (26) revêtu d'une matière isolante, dans lequel est inséré et maintenu un composant métallique fusible (18) qui est réalisé en un alliage fondant à une température ne dépassant que de quelques degrés la température de travail de la cellule d'accumulateur, et en ce que le composant (18) se trouve au moins en contact thermiquement conducteur avec le tube (4R).

5. Cellule d'accumulateur électrochimique selon la revendication 4, caractérisée en ce que la distance entre le cylindre (16) et le fond du tube (4R) est seulement choisie assez grande pour que l'alliage du composant fondu (18) remplisse complètement le volume (19) entre le tube (4R) et le cylindre (16) et établisse une liaison électriquement conductrice entre le tube (4R) et le cylindre (16).

6. Cellule d'accumulateur électrochimique selon l'une des revendications 4 ou 5, caractérisée en ce que le cylindre (16) est relié à l'enveloppe (2) par un conducteur électrique (20).

# Fig.1

# Fig.2